# EUROPÄISCHE PATENTSCHRIFT

(11) **EP 3 615 778 B1**
(45) Veröffentlichungstag und Bekanntmachung des Hinweises auf die Patenterteilung: **24.03.2021**
(21) Anmeldenummer: 18719560.7
(22) Anmeldetag: 23.04.2018
(51) Int. Cl.: B01D 53/94, F01N 3/28, B21D 13/04

(54) **METALLISCHER WABENKÖRPER MIT HAFTUNGSVERBESSERNDEN MIKROSTRUKTUREN**
METALLIC HONEYCOMB STRUCTURE WITH ADHESION IMPROVING MICROSTRUCTURES
CORPS EN NID D'ABEILLES MÉTALLIQUE AVEC DES MICROSTRUCTURES FAVORISANT L'ADHÉSION

(30) Priorität: 27.04.2017 DE 102017207151
(43) Veröffentlichungstag der Anmeldung: 04.03.2020
(73) Patentinhaber: Vitesco Technologies GmbH, 30165 Hannover (DE)
(72) Erfinder: STOCK, Holger, 53721 Siegburg (DE); HIRTH, Peter, 51503 Rösrath (DE); KURTH, Ferdi, 53894 Mechernich (DE); HELMER, Olaf, 53757 Sankt Augustin (DE)
(86) Internationale Anmeldenummer: PCT/EP2018/060357
(87) Internationale Veröffentlichungsnummer: WO 2018/197423

(56) Entgegenhaltungen:
- EP-A1- 0 201 614
- DE-A1- 2 636 672
- FR-A1- 2 321 347

## Beschreibung

Die vorliegende Erfindung betrifft einen metallischen Wabenkörper mit für ein Gas durchströmbaren Kanälen aufgebaut aus zumindest teilweise strukturierten Blechlagen. Solche Wabenkörper sind in vielen verschiedenen Ausführungen bekannt und dienen im Allgemeinen als Trägerkörper für katalytisch aktive Beschichtungen zur Beseitigung von schädlichen oder unerwünschten Bestandteilen aus einem Gasstrom, insbesondere einem Abgasstrom eines Verbrennungsmotors. Im vorliegenden Fall geht es besonders um Wabenkörper zur Reinigung von Dieselabgasen, insbesondere zur Beseitigung von Stickoxiden (NOx) aus dem Abgas eines Dieselmotors. In der Vergangenheit wurden bereits verschiedene Formen, Größen und Ausrichtungen für die Strukturierung von Blechlagen in metallischen Wabenkörpern vorgeschlagen, die entweder eine Erhöhung der Haltbarkeit, Vergrößerung von Turbulenzen in dem Wabenkörper, eine Strömungsleitfunktion oder eine Vergrößerung der mit einem Gasstrom in Kontakt kommenden Oberfläche zum Ziel hatten.

Die DE 26 36 672 A beschreibt beispielweise einen Wabenkörper, dessen Blechlagen eine Mikrostruktur aufweisen, wobei ein Teil der Blechlagen außerdem eine Makrostruktur aufweist, die im Wesentlichen für die Größe von Kanälen bestimmend ist, durch die ein Gas strömen kann. Diese Art der Strukturierung hatte zum Ziel, die wirksame Oberfläche in dem Wabenkörper zu vergrößern, was bedeutet, dass eine später aufgebrachte Beschichtung relativ dünn sein musste, damit sie den Mikrostrukturen im Wesentlichen folgen konnte. Es wurde dabei darauf geachtet, dass die Mikrostrukturen so gestaltet wurden, dass sie beim späteren Beschichten nicht ausgefüllt wurden, da dies als Verlust von wirksamer Oberfläche und als unerwünscht betrachtet wurde. Aus fertigungstechnischen Gründen und weil eine gleichmäßige Beschichtung solcher Strukturen sich als sehr schwierig erwies, wurde dieses Konzept nicht weiterverfolgt.

Bei der Beseitigung z. B. von Stickoxiden aus einem Gasstrom ergibt sich allerdings eine ganz andere Situation. In diesem Fall kommt es nicht nur auf die Größe der Oberfläche einer Beschichtung an, die in Kontakt mit dem zur reinigenden Gasstrom kommt, sondern auch auf die Sauerstoffspeicherfähigkeit einer Beschichtung als Ganzes, das heißt auch auf die Gesamtmenge an Beschichtungsmaterial, also auch die Dicke der Beschichtung. Auf herkömmlichen Wabenkörpern haftet eine typischerweise für solche Zwecke verwendete Beschichtung am besten in den Zwickeln, die sich in der Nähe von Berührungsstellen glatter und gewellter Bleche bilden, während an den glatten Seitenwänden eines Kanals nur geringe Mengen Beschichtung haften. Zwar kann man die Menge der haftenden Beschichtung durch eine Vergrößerung der Anzahl an Kanälen pro Flächeneinheit verbessern, jedoch werden die hydraulischen Querschnitte der Kanäle dadurch immer kleiner und der Druckverlust in einem solchen Wabenkörper immer größer.

Die Druckschrift FR 2 321 347 A offenbart einen Katalysatorträger mit einer Vielzahl von durchlaufenden Kanälen, bestehend aus einem oder mehreren Metallstreifen, die mit einem ersten Satz von Wellungen versehen sind, deren Erhöhungen und Vertiefungen sich quer über den Streifen erstrecken, wobei der oder die Streifen in Lagen angeordnet sind und die Erhöhungen des erste Satzes von Wellungen jeder Lage im Winkel zu den Erhöhungen des ersten Satzes von Wellungen einer benachbarten Lage oder von benachbarten Lagen und quer über diese hinweg verlaufen.

Die Druckschrift EP 0 201 614 A offenbart einen Reaktor zum Durchführen von heterogenen, katalysierten chemischen Reaktionen, mit mindestens einem einen Katalysator aufweisenden Packungselement, das aus parallel zur Hauptströmungsachse des Reaktors angeordneten, gewellten Platten besteht, deren Wellung schräg zur Hauptströmungsachse geneigt und bei benachbarten Platten entgegengesetzt gerichtet ist

Aufgabe der vorliegenden Erfindung ist es, durch eine geeignete Strukturierung der Blechlagen eine größere Menge an keramischem Beschichtungsmaterial haltbar in einem metallischen Wabenkörper zu befestigen, ohne den Druckverlust zu sehr zu erhöhen. Zur Lösung dieser Aufgabe dient ein metallischer Wabenkörper mit den Merkmalen des unabhängigen Anspruchs 1. Vorteilhafte Weiterbildungen sind in den abhängigen Ansprüchen angegeben, wobei diese einzeln oder in sinnvoller Weise miteinander kombiniert Anwendung finden können.

Die vorliegende Erfindung macht sich die früher als Nachteil angesehene Eigenschaft einer keramischen Beschichtung zunutze, durch Oberflächenkräfte und Adhäsionskräfte besonders gut in spitzen Winkeln zwischen Blechwänden zu haften. Ein erfindungsgemäßer metallischer Wabenkörper mit für ein Gas durchströmbaren Kanälen aufgebaut aus zumindest teilweise strukturierten Blechlagen zeichnet sich dadurch aus, dass die Blechlagen zumindest in Teilbereichen mindestens zwei unterschiedliche Strukturen aufweisen, von denen die erste mit einer größeren Strukturhöhe die Größe der Kanäle bestimmt und die zweite Struktur eine wesentlich kleinere Strukturhöhe zwischen Tälern und Bergen aufweist und die Form und/oder die Strukturhöhe der zweiten Struktur so gewählt sind, dass durch eine aufgebrachte keramische Beschichtung die Täler der zweiten Struktur im Durchschnitt zu mindestens 10 % ihrer Strukturhöhe aufgefüllt sind. Es ist dabei davon auszugehen, dass nicht alle Täler exakt bis zur gleichen Höhe aufgefüllt sind, da Fertigungstoleranzen und übliche Beschichtungsschritte dies nicht zulassen. Im Durchschnitt werden jedoch durch die Beschichtung die Täler teilweise aufgefüllt sein, wodurch erheblich mehr Beschichtungsmaterial an den Blechen anhaftet als es ohne die zweite Struktur oder bei einer der zweiten Struktur folgenden dünnen Beschichtung der Fall wäre.

Bei einer bevorzugten Ausführungsform der Erfindung ist die zweite Struktur eine Zick-zack-Wellung mit Tälern, die im Durchschnitt betrachtet einen spitzen Winkel zwischen die Täler begrenzenden Flanken bilden, vorzugsweise einen Winkel von weniger als 75°, insbesondere weniger als 50°. Zwar wird es aus fertigungstechnischen Gründen nicht möglich sein, Bleche wirklich zu falten, da hierzu immer ein gewisser Minimalkrümmungsradius nötig ist, was aber für die Wirkungsweise der Erfindung keine Rolle spielt, solange die Flanken der Täler (die nicht notwendigerweise gradlinig verlaufen müssen) nur in ihrem unteren Endbereich vor einer eventuellen Krümmung in einem Minimalkrümmungsradius einen spitzen Winkel zueinander bilden. Ein solcher Winkel hat eine ähnliche Wirkung auf die Haftung einer Beschichtung wie ein Zwickel an Berührungsstellen von glatten und gewellten Blechen.

Vorzugsweise werden die Winkel der Flanken und die Strukturhöhe der zweiten Struktur in Abhängigkeit von der geplanten Beschichtung so gewählt, dass die Beschichtung mindestens 20 % der Strukturhöhe auffüllen kann, vorzugsweise mindestens 30 %, insbesondere sogar mindestens 50 %. Erfindungsgemäß trägt ein solcher Wabenkörper nach seiner Fertigstellung eine Beschichtung für die Entfernung von Stickoxiden (NOx) und/oder Kohlenwasserstoffen (CHx) aus einem Gasstrom, wobei die in den Tälern zusätzlich haftende Beschichtung die Speicherfähigkeit des Wabenkörpers für eine oder mehrere der Reaktionskomponenten, insbesondere Sauerstoff, Stickoxide, Ammoniak und/oder Kohlenwasserstoffe erhöht.

Um andererseits auch noch einen zusätzlichen Effekt bei der Größe der Oberfläche, die mit dem Gasstrom in Kontakt kommt, zu erreichen, wird bei einer bevorzugten Ausführungsform der Erfindung die zweite Strukturhöhe so groß gemacht, dass sie von einer Beschichtung nicht vollständig eingeebnet werden kann, insbesondere mindestens 10 %, vorzugsweise mindestens 30 % der Strukturhöhe vorhanden bleiben. Auf diese Weise entsteht eine noch leicht der zweiten Struktur folgende Beschichtung, wodurch einerseits die einen Kanal begrenzende Oberfläche erhöht und andererseits die Menge der haftenden Beschichtung gesteigert wird.

In einer weiteren bevorzugten Ausführungsform ist der Wabenkörper in an sich bekannter Weise aus Blechlagen gewickelt und/oder geschichtet, wobei vorzugsweise an einer Vielzahl von Berührungsstellen die Bleche miteinander verlötet sind und wobei im Bereich der Berührungsstellen zumindest eine der Blechlagen keine zweite Struktur aufweist. Insbesondere ist es möglich, eine Blechlage ohne erste und ohne zweite Struktur gemeinsam mit einer benachbarten Blechlage, die beide Strukturen aufweist, aufzuwickeln. Dies ist fertigungstechnisch von Vorteil und führt zu definierten Berührungsstellen. Es ist aber möglich, eine mit der ersten Struktur versehene Blechlage nur in den Bereichen der Flanken der ersten Struktur mit der zweiten Struktur zu versehen. Auch dies führt zu einem leichteren Gleiten von benachbarten Blechlagen aufeinander beim Wickeln und erlaubt definierte Berührungsstellen zum Löten.

Erfindungsgemäß wird als geeignete Größe für die erste Strukturhöhe eine Höhe von 1 bis 4 mm vorgesehen, während die kleinere zweite Strukturhöhe 0,1 bis 0,8 mm betragen sollte. Das Verhältnis von erster zu zweiter Strukturhöhe ist größer als 1,3, vorzugsweise größer als 1,5.

Die Periodizität (auch "Pitch" genannt) der ersten Struktur liegt im für Wabenkörper üblichen Bereich, die der zweiten kleineren Struktur zwischen 0,05 und 0,2 mm, wobei sie so klein gewählt werden sollte, dass sich genügend schmale Täler mit einem geeigneten Winkel ihrer Flanken zueinander bilden.

Auf diese Weise ist es erfindungsgemäß möglich, einen metallischen Wabenkörper herzustellen, der eine (keramische) Beschichtung zur Umsetzung von unerwünschten Komponenten eines Gasstromes, insbesondere NOx, von mindestens 200 g/l (Gramm pro Liter Wabenkörpervolumen) bei einer Zelldichte von z. B. mindestens 50 cpsi (cells per squareinch) trägt. Vorzugsweise werden 250 g/l oder sogar 300 g/l aufgebracht, wobei Zelldichten bis zu 600 cpsi eingesetzt werden können.

Im Folgenden werden Ausführungsbeispiele der Erfindung, auf die diese jedoch nicht beschränkt ist, anhand der Zeichnung näher erläutert. Es zeigen:
- Fig. 1: schematisch in stirnseitiger Ansicht einen Teil eines erfindungsgemäßen Wabenkörpers mit einer Mikrostruktur an allen Blechlagen,
- Fig. 2: eine Blechlage mit einer erfindungsgemäßen Mikrostruktur,
- Fig.3: einen schematischen Querschnitt einer Zelle eines erfindungsgemäßen Wabenkörpers mit zweiten Strukturen nur an Teilbereichen der Kanalwände,
- Fig. 4.: einen Ausschnitt aus Fig. 3 mit aufgebrachter Beschichtung, und
- Fig. 5: einen Abschnitt einer Blechlage mit einer Mikrowellung, bei der sich auch bei breiten Wellentälern spitze Winkel bilden.

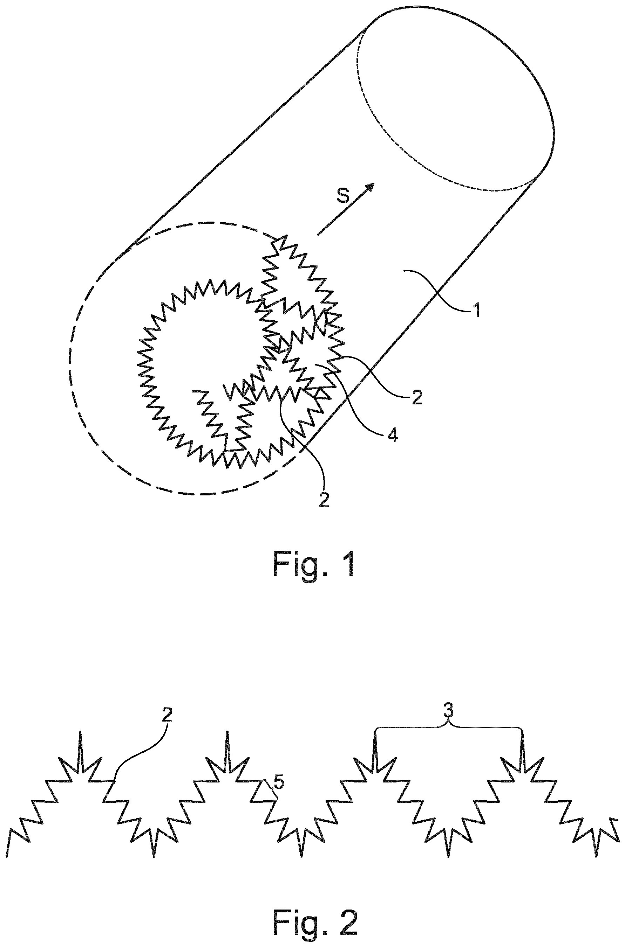

Figur 1 zeigt schematisch einen in an sich bekannter Weise aus Blechlagen 2 gewickelten oder geschichteten Wabenkörper 1, wobei es für die Erfindung keine entscheidende Rolle spielt, welche Bauform verwendet wird. Wichtig ist aber, dass die Blechlagen zumindest in Teilbereichen eine erste Struktur 3 mit einer größeren Strukturhöhe H haben, die im Wesentlichen die Größe von Kanälen 4 in dem Wabenkörper 1 bestimmt. Diese Kanäle 4 können von einem Gas in einer Strömungsrichtung S durchströmt werden und die erste Struktur 3 ist typischerweise eine quer zur Strömungsrichtung verlaufende Wellung. Außerdem weisen die Blechlagen 3 zumindest in Teilbereichen eine zweite Struktur 5 mit einer kleineren Strukturhöhe h auf, die dazu dient, mehr Beschichtungsmaterial in dem Wabenkörper haltbar zu befestigen. Die zweite Struktur bildet Täler 6 und Berge 7, die typischerweise in Strömungsrichtung verlaufen. Die zweite Struktur 5 ist daher meist auch eine quer zur Strömungsrichtung S verlaufende Wellung. Für die Haftung von Beschichtungsmaterial ist es wichtig, dass die zweite Struktur 5 im unteren Bereich der Täler 6 so gestaltet ist, dass sich ein spitzer Winkel, vorzugsweise sogar ein Winkel unter 75°, insbesondere sogar unter 50°, bildet. Dann gleicht die Struktur dort einem Zickel zwischen gewellten und glatten Blechlagen, in dem sich typischerweise besonders viel Beschichtungsmaterial ablagert.

Fig. 2 zeigt schematisch einen Abschnitt einer Blechlage 2 mit einer ersten Struktur 3 und einer zweiten Struktur 5, im vorliegenden Fall einer Zick-zack-Wellung. Ein erfindungsgemäßer Wabenkörper 1 kann vollständig so ausgestaltet sein, es ist aber auch möglich glatte Blechlagen und die hier dargestellten abwechselnd zu verwenden.

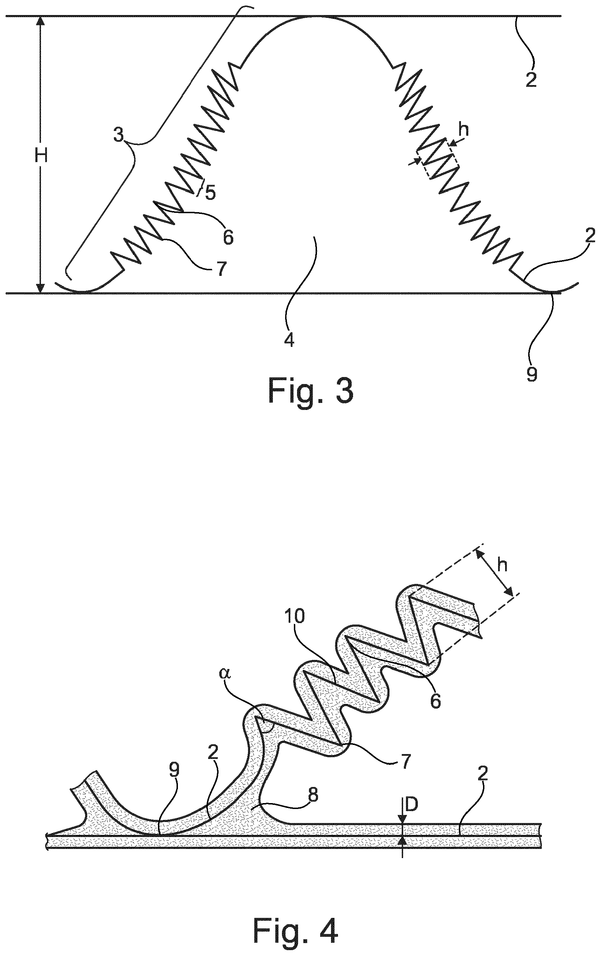

Fig. 3 zeigt als Ausführungsbeispiel der Erfindung schematisch den Querschnitt eines Kanals 4 eines erfindungsgemäßen Wabenkörpers 1, bei dem zweite Strukturen 5 nur in Teilbereichen der Kanalwände vorhanden sind. Die größere Strukturhöhe H einer mit einer ersten Struktur 3 gewellten Blechlage 2, die zwischen zwei glatten Blechlagen 2 angeordnet ist, bestimmt die Größe des Kanals 4. Die Blechlagen 2 berühren sich an Berührungsstellen 9, wo sie gegebenenfalls auch miteinander verlötet sein können. Eine zweite Struktur 5 mit einer kleineren Strukturhöhe h ist in Teilbereichen der Kanalwände vorhanden und bildet hier Täler 6 und Berge 7. Dabei ist zu beachten, dass ein Tal 6 in einem Kanal 4 in einem jeweils benachbarten Kanal einen Berg 7 bildet und umgekehrt.

Fig. 4 zeigt einen vergrößerten Ausschnitt aus Fig. 3 nach dem Aufbringen einer Beschichtung 8. Diese Beschichtung weist eine Dicke D auf, die jedoch nicht überall gleich ist. In den Zwickeln in der Nähe der Berührungsstelle 9 und in den Tälern 6 der zweiten Struktur 5 ist die Beschichtung dicker als in anderen Bereichen. Die Beschichtung füllt die Täler 6 zu einem Teil aus, wodurch erheblich mehr Beschichtungsmaterial haltbar in dem Wabenkörper 1 angebracht werden kann als ohne die zweite Struktur 5. Wichtig ist für das zumindest teilweise Ausfüllen der Täler 6 mit Beschichtung 8, dass die Flanken 10 der Täler in einem unteren Endbereich einen spitzen Winkel α (Alpha) zueinander bilden, der vorzugsweise kleiner als 75°, insbesondere kleiner als 50°, ist.

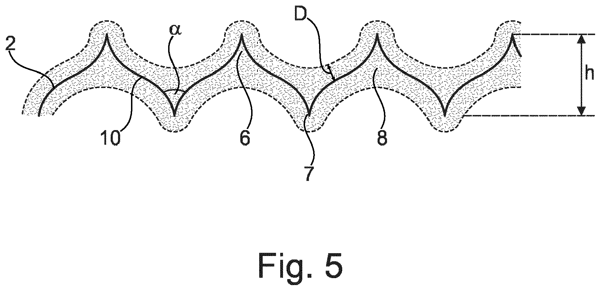

Fig. 5 veranschaulicht, dass es für die Erfindung nicht zwingend erforderlich ist, dass die Täler 6 der zweiten Struktur 5 von geradlinigen Flanken 10 begrenzt sind. Es genügt, wenn sich in einem unteren Endbereich der Flanken Bedingungen einstellen wie in einem Zwickel an Berührungsstellen von glatten und gewellten Blechen. Dann ergibt sich ein guter Halt auch für eine größere Dicke D einer Beschichtung 8.

Die vorliegende Erfindung eignet sich insbesondere zur haltbaren Befestigung von Beschichtungen in einem Wabenkörper zur Beseitigung von Stickoxiden (NOx) aus einem Gasstrom, insbesondere bei der Abgasreinigung von Dieselmotoren, wo es nicht nur auf die vorhandene Kontaktoberfläche zu dem Gasstrom, sondern z.B. wegen der Speicherfähigkeit für Sauerstoff, Stickoxide und/oder Ammoniak auch auf die Dicke der Beschichtung ankommt.

## Patentansprüche

1. Metallischer Wabenkörper (1) mit für ein Gas durchströmbaren Kanälen (4) aufgebaut aus zumindest teilweise strukturierten Blechlagen (2), wobei die Blechlagen (2) zumindest in Teilbereichen mindestens zwei unterschiedliche Strukturen (3, 5) aufweisen, von denen die erste (3) mit einer größeren Strukturhöhe (H) die Größe der Kanäle (4) bestimmt und die zweite Struktur (5) eine wesentlich kleinere Strukturhöhe (h) zwischen Tälern (6) und Bergen (7) aufweist, **dadurch gekennzeichnet, dass** der Wabenkörper eine keramische Beschichtung (8) aufweist, die im Durchschnitt die Täler (6) der zweiten Struktur (5) zu mindestens 10%, vorzugsweise mindestens 20%, besonders bevorzugt mindestens 30%, insbesondere mindestens 50% der Strukturhöhe (h) der zweiten Struktur (5) ausfüllt.

2. Metallischer Wabenkörper (1) nach Anspruch 1, wobei die zweite Struktur (5) eine Zick-zack-Wellung ist mit Tälern (6), die im Durchschnitt betrachtet einen spitzen Winkel (α) zwischen die Täler (6) bildenden Flanken (10) bilden, vorzugsweise einen Winkel (α) von weniger als 75°, insbesondere weniger als 50°.

3. Metallischer Wabenkörper (1) nach einem der vorhergehenden Ansprüche, wobei der Wabenkörper (1) mit einer Beschichtung (8) für die Entfernung von NOx aus einem Gasstrom versehen ist.

4. Metallischer Wabenkörper (1) nach einem der vorhergehenden Ansprüche, wobei die zweite Strukturhöhe (h) so groß ist, dass sie von einer Beschichtung (8) nicht vollständig eingeebnet werden kann, insbesondere mindestens 10%, vorzugsweise mindestens 30% der Strukturhöhe (h) nach einer Beschichtung vorhanden bleiben.

5. Metallischer Wabenkörper (1) nach einem der vorhergehenden Ansprüche, wobei der Wabenkörper in an sich bekannter Weise aus Blechlagen (2) gewickelt und/oder geschichtet ist, die vorzugsweise an einer Vielzahl von Berührungsstellen (9) miteinander verlötet sind, wobei im Bereich der Berührungsstellen (9) zumindest eine der Blechlagen (2) keine zweite Struktur (5) aufweist.

6. Metallischer Wabenkörper (1) nach einem der vorhergehenden Ansprüche, wobei die erste größere Strukturhöhe (H) 1 bis 4 mm beträgt und die kleinere zweite Strukturhöhe 0,1 bis 0,8 mm und wobei das Verhältnis von erster zu zweiter Strukturhöhe (H/h) größer 1,3, vorzugsweise größer 1,5 ist.

7. Metallischer Wabenkörper (1) nach einem der vorhergehenden Ansprüche, wobei eine Periodizität der zweiten kleineren Struktur (5) zwischen 0,05 und 0,2 mm liegt.

8. Metallischer Wabenkörper nach einem der vorhergehenden Ansprüche, wobei der Wabenkörper eine Beschichtung, insbesondere zur Umsetzung von Stickoxiden (NOx) und/oder Kohlenwasserstoffen (CHx), von mindestens 200 g/l (Gramm pro Liter Wabenkörpervolumen), vorzugsweise mindestens 250 g/l, insbesondere etwa 300 g/l, trägt.

## Claims

1. Metallic honeycomb body (1) with channels (4) through which a gas can flow, made up of layers of at least partially structured sheet metal (2), wherein the layers of sheet metal (2) have at least in subregions at least two different structures (3, 5), of which the first structure (3), with a greater structure height (H), determines the size of the channels (4) and the second structure (5) has a much smaller structure height (h) between troughs (6) and peaks (7), **characterized in that** the honeycomb body has a ceramic coating (8) which on average fills the troughs (6) of the second structure (5) to at least 10%, preferably at least 20%, particularly preferably at least 30%, in particular at least 50%, of the structure height (h) of the second structure (5).

2. Metallic honeycomb body (1) according to Claim 1, wherein the second structure (5) is a zigzag corrugation with troughs (6) which, considered on average, form an acute angle (α) between flanks (10) forming the troughs (6), preferably an angle (α) of less than 75°, in particular less than 50°.

3. Metallic honeycomb body (1) according to one of the preceding claims, wherein the honeycomb body (1) is provided with a coating (8) for the removal of NOx from a gas stream.

4. Metallic honeycomb body (1) according to one of the preceding claims, wherein the second structure height (h) is of such a size that it cannot be completely levelled by a coating (8), in particular at least 10%, preferably at least 30%, of the structure height (h) remains after a coating.

5. Metallic honeycomb body (1) according to one of the preceding claims, wherein the honeycomb body is wound from layers of sheet metal (2) and/or laminated in a way known per se, said metal sheets preferably being soldered to one another at a multiplicity of points of contact (9), wherein at least one of the layers of sheet metal (2) does not have a second structure (5) in the region of the points of contact (9).

6. Metallic honeycomb body (1) according to one of the preceding claims, wherein the first, greater structure height (H) is 1 to 4 mm and the smaller, second structure height is 0.1 to 0.8 mm and wherein the ratio of the first to the second structure height (H/h) is greater than 1.3, preferably greater than 1.5.

7. Metallic honeycomb body (1) according to one of the preceding claims, wherein a periodicity of the second, smaller structure (5) lies between 0.05 and 0.2 mm.

8. Metallic honeycomb body according to one of the preceding claims, wherein the honeycomb body bears a coating, in particular for the conversion of nitrogen oxides (NOx) and/or hydrocarbons (CHx), of at least 200 g/l (grams per litre of volume of the honeycomb body), preferably at least 250 g/l, in particular approximately 300 g/l.

## Revendications

1. Corps alvéolaire métallique (1) muni de canaux (4) pouvant être traversés par un gaz, composé de couches de tôle au moins partiellement structurées (2), les couches de tôle (2) présentant au moins dans des zones partielles au moins deux structures différentes (3, 5), parmi lesquelles la première (3), ayant une hauteur de structure supérieure (H), détermine la taille des canaux (4) et la deuxième structure (5) présente une hauteur de structure sensiblement inférieure (h) entre des creux (6) et des crêtes (7), **caractérisé en ce que** le corps alvéolaire comprend un revêtement céramique (8), qui remplit les creux (6) de la deuxième structure (5) en moyenne à au moins 10 %, de préférence au moins 20 %, de manière particulièrement préférée au moins 30 %, en particulier au moins 50 %, de la hauteur de structure (h) de la deuxième structure (5).

2. Corps alvéolaire métallique (1) selon la revendication 1, dans lequel la deuxième structure (5) est une ondulation en zigzag avec des creux (6), qui forment en moyenne un angle aigu (α) entre les flancs (10) formant les creux (6), de préférence un angle (α) de moins de 75°, en particulier de moins de 50°.

3. Corps alvéolaire métallique (1) selon l'une quelconque des revendications précédentes, dans lequel le corps alvéolaire (1) est muni d'un revêtement (8) pour l'élimination de NOx d'un courant gazeux.

4. Corps alvéolaire métallique (1) selon l'une quelconque des revendications précédentes, dans lequel la deuxième hauteur de structure (h) a une taille telle qu'elle ne peut pas être entièrement nivelée par un revêtement (8), en particulier au moins 10 %, de préférence au moins 30 % de la hauteur de structure (h) reste présente après un revêtement.

5. Corps alvéolaire métallique (1) selon l'une quelconque des revendications précédentes, dans lequel le corps alvéolaire est enroulé et/ou stratifié d'une manière connue en soi à partir de couches de tôle (2), qui sont de préférence brasées les unes avec les autres au niveau d'une pluralité d'emplacements de contact (9), au moins une des couches de tôle (2) ne présentant pas de deuxième structure (5) dans la zone des emplacements de contact (9).

6. Corps alvéolaire métallique (1) selon l'une quelconque des revendications précédentes, dans lequel la première hauteur de structure supérieure (H) est de 1 à 4 mm et la deuxième hauteur de structure inférieure est de 0,1 à 0,8 mm, et dans lequel le rapport entre la première et la deuxième hauteur de structure (H/h) est supérieur à 1,3, de préférence supérieur à 1,5.

7. Corps alvéolaire métallique (1) selon l'une quelconque des revendications précédentes, dans lequel une périodicité de la deuxième structure inférieure (5) se situe entre 0,05 et 0,2 mm.

8. Corps alvéolaire métallique selon l'une quelconque des revendications précédentes, dans lequel le corps alvéolaire porte un revêtement, notamment pour la conversion d'oxydes d'azote (NOx) et/ou d'hydrocarbures (CHx), d'au moins 200 g/l (gramme par litre de volume de corps alvéolaire), de préférence d'au moins 250 g/l, en particulier d'environ 300 g/l.
